# EUROPÄISCHE PATENTSCHRIFT

(11) **EP 2 318 727 B1**
(45) Veröffentlichungstag und Bekanntmachung des Hinweises auf die Patenterteilung: **30.03.2016**
(21) Anmeldenummer: 09777088.7
(22) Anmeldetag: 10.07.2009
(51) Int. Cl.: F16C 32/04

(54) **MAGNETLAGER UND VERFAHREN ZU DESSEN BETRIEB**
MAGNETIC BEARING AND METHOD OF OPERATING THE MAGNETIC BEARING
PALIER MAGNÉTIQUE ET PROCÉDÉ D'OPÉRATION DU PALIER MAGNÉTIQUE

(30) Priorität: 01.08.2008 DE 102008036702
(43) Veröffentlichungstag der Anmeldung: 11.05.2011
(73) Patentinhaber: ThyssenKrupp Transrapid GmbH, 34127 Kassel (DE); ThyssenKrupp Rothe Erde GmbH, 44137 Dortmund (DE)
(72) Erfinder: ZHENG, Qinghua, 82024 Taufkirchen (DE); MILLER, Luitpold, 85521 Ottobrunn (DE)
(74) Vertreter: Lorenz, Bernd Ingo Thaddeus
(86) Internationale Anmeldenummer: PCT/EP2009/005003
(87) Internationale Veröffentlichungsnummer: WO 2010/012366

(56) Entgegenhaltungen:
- EP-A1- 0 411 697
- DE-A1-102006 062 420
- FR-A1- 2 892 780
- JP-A- 8 189 527
- JP-A- 9 126 236
- US-A- 3 860 300

## Beschreibung

Die Erfindung betrifft ein Verfahren zum Betreiben eines Magnetlagers nach dem Oberbegriff des Anspruchs 1 sowie ein Magnetlager der im Oberbegriff des Anspruchs 7 angegebenen Gattung.

Magnetlager, die als Radial- oder Axiallager ausgebildet sein können, und Verfahren zu ihrem Betrieb gemäß den oben bezeichneten Gattungen sind in zahlreichen Varianten bekannt (z. B. Roland Steffen in "Magnetlager, Prinzip und Berechnungsgrundlagen", 2004, http://www.rolandsteffen.de).

Radiallager dieser Art dienen überwiegend der berührungslosen, radialen Lagerung von Rotationskörpern mit Hilfe von an diesen angebrachten Lagerkörpern in Form von kreisrunden Lagerringen. Sie zeichnen sich dadurch aus, dass sie verschleißfrei arbeiten und keine Schmiermittel benötigen. Bevorzugte Anwendungsgebiete sind daher die Vakuum- und Medizintechnik. Bekannt sind z. B. magnetisch gelagerte Herzpumpen für die Herz-Chirurgie. Außerdem werden derartige Magnetlager aber auch z. B. in Werkzeugmaschinen, Windkraftanlagen oder medizinischen Scannern angewendet.

Die berührungslöse Lagerung der Lagerringe erfolgt dadurch, dass ihre radialen Abstände von den sie tragenden, in ihrer Umfangsrichtung verteilt angeordneten, als Elektromagnete ausgebildeten Magnetanordnungen laufend mittels Sensoren ermittelt, die erhaltenen Istwerte mit Abstands-Sollwerten verglichen, die sich ergebenden Differenzwerte einem Regelkreis zugeführt und mit diesen die Ströme in den Wicklungen der Magnetanordnungen so geregelt werden, dass die Abstands-Istwerte im Wesentlichen konstant bleiben und vorgewählte Größen annehmen.

In analoger Weise sind Magnetlager in Form von Axiallagern ausgebildet. In diesem Fall ist z. B. ein auf eine Welle aufgezogener Lagerkörper zwischen wenigstens zwei axial beabstandeten Magnetanordnungen angeordnet, um durch Regelung der Größen der dadurch erhaltenen Lagerspalte die axiale Lage der Welle festzulegen.

Ein gemeinsames Merkmal der beschriebenen Magnetlager besteht darin, dass sie eine hohe Laufgenauigkeit erfordern, um beispielsweise mit einem medizinischen Scanner scharfe und reproduzierbare Bilder zu ermöglichen. Bisher werden diese Laufeigenschaften hauptsächlich dadurch beeinflusst, dass die Lagerkörper mit hoher Präzision gefertigt werden und versucht wird, auf gegenüberliegenden Seiten der Lagerkörper befindliche Lagerspalte während des Betriebs mit Hilfe der Regelung möglichst gleich groß zu halten. Das gilt unabhängig davon, ob es sich um Radial- oder Axiallager oder Kombinationen davon handelt.

Beim Betrieb derartiger Magnetlager hat sich allerdings gezeigt, dass die Temperaturentwicklung in den Magnetanordnungen bzw. deren Wicklungen eine nicht unbedeutende Rolle spielt, insbesondere wenn es sich um Großlager mit Lagerringen handelt, deren Durchmesser z. B. 500 mm, insbesondere 1000 mm und mehr betragen, wie dies z. B. für die Anwendung von Magnetlagern in medizinischen Scannern erwünscht ist: Solange derartige Lager gleichmäßig belastet werden und die Lagerspalte überall, insbesondere auf gegenüberliegenden Seiten der Lagerkörper gleich groß sein sollen, haben die Magnetanordnungen im Wesentlichen denselben Stromverbrauch und damit auch im Wesentlichen gleiche Temperaturen. Werden die Magnetlager jedoch ungleichmäßig belastet, indem z. B. in einer Werkzeugmaschine eine einseitige Druckerhöhung eintritt, in einer Windkraftanlage die Windstärke schwankt oder in einem Scanner aufgrund einer Schieflage, einer Gewichtsverlagerung od. dgl. die Gleichgewichtsverhältnisse verändert werden, dann führt das aufgrund der Vorschrift, dass einander gegenüberliegende Lagerspalte gleich groß sein sollen, zwangsläufig dazu, dass einander gegenüberliegende Magnetanordnungen mit unterschiedlichen elektrischen Strömen betrieben werden müssen, um dieser Vorschrift zu genügen. Dadurch ergeben sich, insbesondere bei Magnetlagern mit großen Abmessungen, entsprechend unterschiedliche, durch die elektrischen Verlustleistungen in den Wicklungen verursachte, örtliche Temperaturschwankungen, die zu unterschiedlichen Wärmedehnungen der Lagerkörper oder Magnetanordnungen führen und dadurch eine exakte Spaltregelung stark behindern, wenn nicht gar unmöglich machen.

Ein Verfahren zum Betreiben eines Magnetlagers nach dem Oberbegriff des Anspruches 1 sowie ein Magnetlager der im Oberbegriff des Anspruches 7 angegebenen Gattung sind aus FR 2 892 780 A1 bekannt. Die Regeleinheiten weisen Mittel zur Ermittlung von Betriebstemperaturen über die elektrischen Widerstände der Wicklungen der Magnetanordnung auf, um bei Erreichen einer zulässigen Höchsttemperatur entweder einen Alarm auszulösen oder den Betrieb zu unterbrechen.

In der DE 10 2006 062 420 A1 wird vorgeschlagen, die Aufheizung dadurch zu verringern, dass die Stromaufnahme minimiert wird und somit weniger Verlustwärme in den Elektromagneten entsteht. Darüber hinaus wird die allmähliche Verlagerung der Lagerkörper durch eine Regelung mit großer Zeitkonstante vorgesehen, die zu einer Verringerung der Strömung führt.

Ausgehend davon besteht das technische Problem der vorliegenden Erfindung darin, die eingangs bezeichneten Magnetlager und Verfahren zu deren Betrieb so auszubilden, dass sich bei allen Betriebsbedingungen im Wesentlichen gleichmäßige Temperaturverteilungen ergeben.

Gelöst wird dieses Problem mit den Merkmalen der Ansprüche 1 und 7.

Die Erfindung beruht auf dem Gedanken, die Regelung der die Wicklungen der Magnetanordnungen durchfließenden Ströme in erster Linie so durchzuführen, dass den Wicklungen von gegenüberliegenden Magnetanordnungen auch dann, wenn sich die mechanische Belastung des Magnetlagers ändert, im Wesentlichen solche elektrischen Ströme zugeführt werden, dass das Auftreten unterschiedlicher Temperaturen vermieden wird. Es wird dabei in Kauf genommen, dass sich die Lagerspalte auf gegenüberliegenden Seiten der Lagerkörper dadurch geringfügig ändern können. Da jedoch die elektrische Spaltregelung mit einer sehr kleinen Zeitkonstante arbeitet, während sich eine eventuelle Temperaturänderung nur langsam auswirkt, ändert sich auch die Größe der einander gegenüberliegenden Lagerspalte nur allmählich, was für die meisten Anwendungszwecke toleriert werden kann. Außerdem ergibt sich der Vorteil, dass dies auch dann gilt, wenn sich aus irgendwelchen Gründen die Lagerkörper oder Magnetanordnungen aufgrund äußerer Temperaturverläufe unterschiedlich erwärmen.

Weitere vorteilhafte Merkmale der Erfindung ergeben sich aus den Unteransprüchen.

Die Erfindung wird nachfolgend in Verbindung mit den beiliegenden Zeichnungen näher erläutert. Es zeigen:
Fig. 1 schematisch ein Magnetlager am Beispiel eines Radiallagers; und
Fig. 2 eine erfindungsgemäße Regeleinrichtung für das Magnetlager nach Fig. 1.

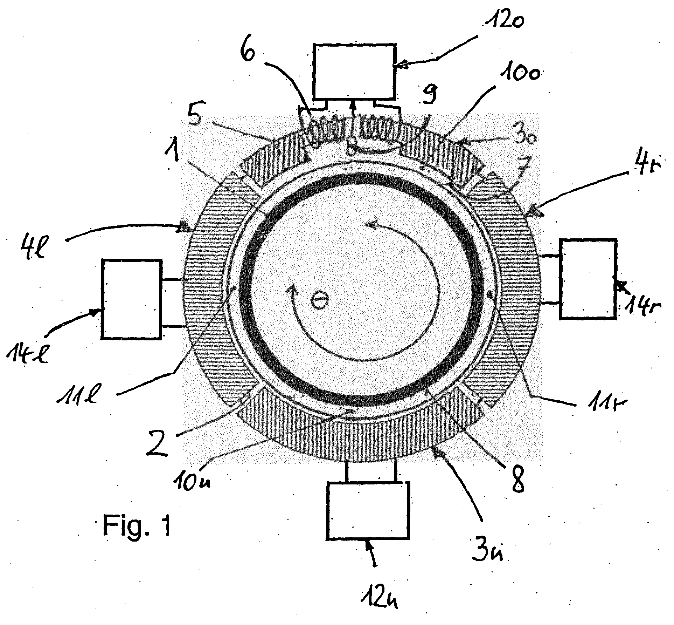

Fig. 1 zeigt schematisch ein Magnetlager mit einem als Innenring und Rotor ausgebildeten, in Richtung eines Doppelpfeils θ drehbaren, ersten Lagerkörpers 1 und einem als Außenring und Stator ausgebildeten, zweiten Lagerkörper 2. Der Lagerkörper 2 ist im Ausführungsbeispiel mit vier Magnetanordnungen 3o, 3u, 4l und 4r versehen, wobei die Buchstaben "o", "u", "l" und "r" für die Zwecke der vorliegenden Anmeldung die Bedeutung "oben", "unten", "links" und "rechts" haben. Die Magnetanordnungen 3o, 3u einerseits und die Magnetanordnungen 4l, 4r andererseits sind jeweils auf gegenüberliegenden Seiten des Lagerkörpers 1 angeordnet, so dass sie zwei Paare von einander diametral gegenüberliegenden Magnetanordnungen bilden. Außerdem weist jede Magnetanordnung 3 und 4, wie in Fig. 1 schematisch nur für die Magnetanordnung 3o angedeutet ist, eine auf einen Kern 5 gewickelte Wicklung 6 auf. Magnetpolflächen 7 der Kerne 5 sind einer Umfangs- bzw. Radialfläche 8 des Lagerskörpers 1 zugeordnet und können wie üblich an deren Kontur angepasste, konkave Formen aufweisen. Der Aufbau der Magnetanordnungen 3o, 3u, 4l und 4r ist vorzugsweise gleich, weshalb nur die Magnetanordnung 3o genauer beschrieben wird.

Der Lagerkörper 1 besteht aus einem ferromagnetischen Material und wird durch die Magnetanordnungen 3, 4 in an sich bekannter Weise radial zentriert und geführt. Außerdem kann der Lagerkörper 1 z. B. am Umfang einer Scheibe aus einem nicht ferromagnetischen Material befestigt, insbesondere auf diese aufgeschrumpft und/oder an einem zu lagernden Rotationskörper befestigt sein. Vorzugsweise ist an den beiden axialen Enden eines Rotors je ein derartiger, ein Radiallager bildender Lagerkörper 1 angebracht, während z. B. in einem mittleren Teil des Rotors ein weiterer, nicht gezeigter Lagerkörper angeordnet ist, der als Axiallager dient und mit umlaufenden Randabschnitten seiner Stirn- bzw. Axialflächen weiteren Magnetanordnungen gegenübersteht. Ebenfalls nicht dargestellt ist der Antrieb, mittels dessen der Rotor und damit auch die Lagerkörper 1 in Rotation versetzt werden. Hierzu können übliche, dem Fachmann bekannte Mittel verwendet werden.

Wie Fig. 1 weiter zeigt, ist jeder Magnetanordnung 3, 4 ein vorzugsweiser induktiver Sensor 9 zugeordnet, der die Istwerte der Größe bzw. Dicke eines Lager- bzw. Luftspalts misst, der sich beim Betrieb des Magnetlagers, d. h. beim Drehen des Lagerkörpers 1, zwischen dessen Umfangs- bzw. Radialfläche 8 und den Polflächen 7 der zugeordneten Magnetanordnung 3, 4 bildet. In Analogie zu den Magnetanordnungen 3o, 3u, 4l, 4r sind die Lagerspalte in Fig. 1 mit den Bezugszeichen 10o, 10u, 11l und 11r gezeichnet.

Die Ausgangssignale der Sensoren 10 und 11 werden je einer vereinfacht dargestellten Regeleinheit 12o, 12u, 14l, 14r zugeführt und in dieser mit einem vorgegebenen Sollwert verglichen. Aus der Differenz beider Signale wird ein Stellsignal abgeleitet, das einer den Strom durch die betreffende Wicklung steuernden Stromsteller zugeführt wird. Dadurch wird der Wicklungsstrom und damit die am Ort des Sensors 9 auf den Lagerkörper 1 wirkende Magnetkraft so gesteuert, dass die Größe der Lagerspalte 10, 11 trotz etwaiger geometrischer Unwuchten im Lagerring 1 im Wesentlichen den gewünschten Sollwert annimmt. Diese Art der Regelung ist für alle Magnetanordnungen 3, 4 vorzugsweise dieselbe.

Magnetlager dieser Art und Verfahren zu deren Betrieb sind allgemein und z. B. aus der eingangs genannten Druckschrift bekannt.

Herkömmliche Magnetlager (Fig. 1) werden in der Weise betrieben, dass mit Hilfe der Regeleinheiten 12, 14 versucht wird, die Größen der Lagerspalte 100, 10u einerseits und 11l, 11r andererseits exakt gleich zu machen. Dies kann, solange der Lagerkörper 1 beim Betrieb unter Nominalbedingungen in Richtung aller vorhandenen Magnetanordnungen 3, 4 im Wesentlichen gleichmäßig belastet wird und daher nur etwaige Unwuchten od. dgl. auszugleichen sind, dadurch erreicht werden, dass den Wicklungen 6 aller Magnetanordnungen 3, 4 mit Hilfe der Regeleinheiten 12, 14 im Mittel gleich große elektrische Ströme zugeführt werden. Das hat zur Folge, dass alle Wicklungen 6 und Magnetanordnungen 3, 4 auch im Mittel gleiche Betriebstemperaturen annehmen. Dasselbe kann erreicht werden, wenn der Lagerkörper 1 unter Nominalbedingungen z. B. aufgrund seines Eigengewichts in der einen oder anderen Richtung stärker als in der entgegengesetzten Richtung belastet wird und daher die einander gegenüberliegenden Magnetanordnungen 3o, 3u und/oder 4l, 4r unterschiedlich ausgelegt werden, um auch unter solchen Nenn- bzw. Nominalbedingungen mit im wesentlichen gleichen Strömen gleich große Spalte zu erhalten.

Wird der Lagerkörper 1 dagegen in irgendeiner Richtung stärker als unter Nominalbedingungen belastet, d. h. ändert sich die Lastsituation gegenüber den Nominalbedingungen, dann muss durch die entsprechende Wicklung 6 ein stärkerer Strom als durch die ihr gegenüberliegende Wicklung geleitet werden, um diese stärkere Belastung zu kompensieren, was aufgrund einer entsprechend vergrößerten Verlustleistung mit einer erhöhten Erwärmung der betreffenden Wicklung 6 bzw. Magnetanordnung 3, 4 verbunden ist. Das ist aus den eingangs genannten Gründen unerwünscht und wird erfindungsgemäß durch die nachfolgend erläuterte Betriebsweise vermieden.

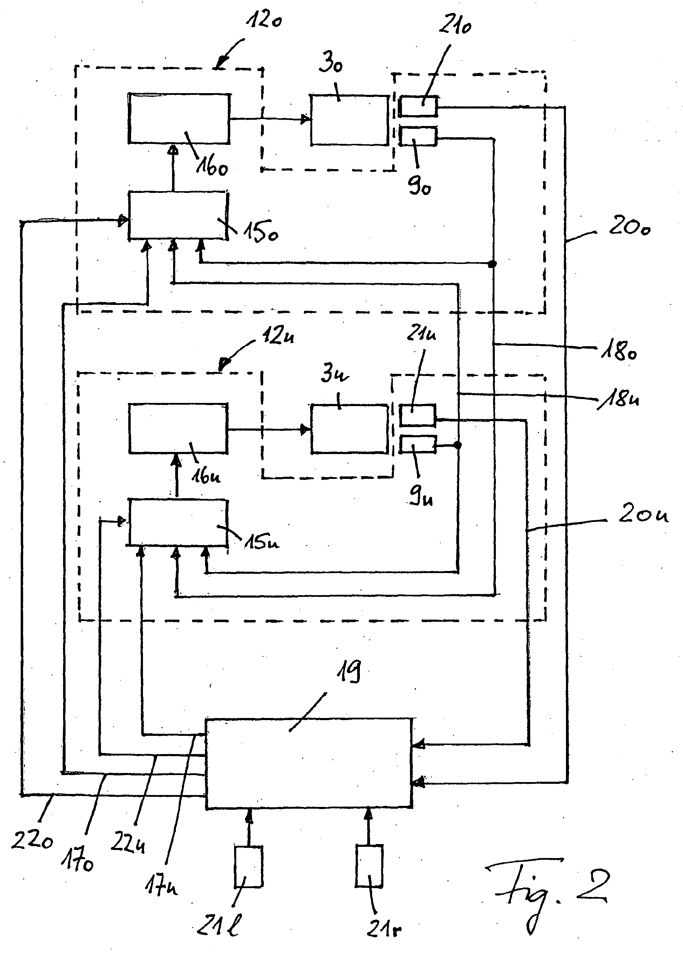

Es sei angenommen, dass die beiden gegenüberliegenden Magnetanordnungen 3o, 3u ein erstes Paar von Magnetanordnungen bilden und der Lagerspalt 10o die Größe So, der Lagerspalt 10u dagegen die Größe Su besitzt. Die Regelung der die Wicklungen 6 dieser Magnetanordnungen 3o, 3u durchfließenden Ströme wird unter Nominalbedingungen, d. h. im Normalfall, in dem keine außergewöhnliche Belastung auftritt, nach der Vorschrift So - Su = 0 durchgeführt. Hierzu dienen die beiden Regeleinheiten 12o und 12u, die in Fig. 2 genauer dargestellt sind.

Gemäß Fig. 2 enthält die Regeleinheit 12o für die in Fig. 1 obere Magnetanordnung 3o einen Spaltsensor 9o, dessen Ausgangssignale, die für die Istwerte des Lagerspalts 10o charakteristisch sind, einem Regler 15o zugeführt werden. Dessen Ausgang ist mit einem Stromsteller 16o verbunden, der den der Wicklung 6 der Magnetanordnung 3o zuzuführenden Strom liefert. Der Regler 15o vergleicht die Istwerte des Sensors 9o mit einem über eine Leitung 17o zugeführten Sollwert und führt dem Stromsteller 16o ein aus der Differenz abgeleitetes Steuersignal zu.

Fig. 2 zeigt weiter, dass die Regeleinheit 12u für die in Fig. 1 untere Magnetanordnung 3u entsprechend ausgebildet ist, weshalb deren Teile mit gleichen Bezugsziffern, jedoch zusätzlich mit dem Buchstaben "u" bezeichnet sind. Außerdem ist aus Fig. 2 ersichtlich, dass die Istwerte des Sensors 9o über eine Leitung 18o auch dem Regler 15u und die Istwerte des Sensors 9u über eine Leitung 18u auch dem Regler 15o zugeführt werden..

In den Reglern 15o und 15u werden die Istwerte der Spalte 10o und 10u miteinander verglichen und nach der oben genannten Vorschrift So - Su = 0 in Steuersignale für die Stromsteller 160, 16u umgewandelt. Der Sollwert "0" für die Differenz So - Su wird dabei von je einem Ausgang eines Temperaturreglers 19 festgelegt. Dieser weist zwei Eingänge auf, denen über Leitungen 20o, 20u die Istwerte von Temperaturen zugeführt werden, die sich beim laufenden Betrieb des Magnetlagers in den Magnetanordnungen 3o, 3u oder deren Wicklungen 6 ergeben und mittels Temperatursensoren 21o, 21u ermittelt werden, die in Fig. 2 schematisch angedeutet und mit den Leitungen 20o, 20u verbunden sind. Der Temperaturregler 19 vergleicht die Istwerte der beiden Temperaturen miteinander und gibt an seinen Ausgängen jeweils einen Sollwert von 0 aus, solange die Istwerte beider Temperatursensoren 21o, 21u gleich sind.

Ändert sich die Lastsituation, d. h. wird der Lagerkörper 1 beim Betrieb des Magnetlagers, ausgehend von den Nominalbedingungen, ungleichmäßig belastet, indem er z. B. durch eine Kraft in Fig. 1 zusätzlich nach unten gezogen oder aus anderen Gründen stärker in Richtung der Magnetanordnung 3u als in Richtung der Magnetanordnung 3o gedrückt wird, dann hat dies bei der beschriebenen Regelung zur Folge, dass der Wicklung 6 der Magnetanordnung 3o automatisch ein größerer Strom als der Magnetanordnung 3u zugeführt wird, da jetzt die obere Magnetanordnung 3o eine größere Kraft auf den Lagerkörper 1 ausüben muss, um die Bedingung So - Su = 0 zu verfüllen. Das hat jedoch die bereits oben beschriebene Folge, dass sich die obere Magnetanordnung 3o oder deren Wicklung 6 stärker als die untere Magnetanordnung 3u oder deren Wicklung 6 erwärmt, was zu unterschiedlichen und damit unerwünschten Wärmedehnungen des Lagerkörpers 1 führen kann, die eine nicht tolerierbare Unrundheit des Lagerkörpers 1 bewirken und den Regelvorgang stören könnten.

Erfindungsgemäß wird daher für diesen Fall vorgeschlagen, die Regeleinrichtung auf die Vorschrift So - Su = a umzustellen, wobei a < 0 gilt. Diese Umstellung wird automatisch durchgeführt, wenn sich die von den Temperatursensoren 21o, 21u gelieferten Istwerte der Temperaturen um einen gewissen Mindestwert voneinander unterscheiden. Die Vorschrift So - Su = a oder So = Su + a mit a < 0 bedeutet, dass die Größe So des oberen Lagerspalts 10o kleiner als die Größe des unteren Lagerspalts Su gemacht werden soll. Demzufolge gibt der Temperaturregelkreis 19 an die Leitungen 17o, 17u entsprechende Signale als Sollwerte für die Regler 15o, 15u aus, so dass diese die Stromsteller 16o, 16u jetzt derart steuern, dass sich ein Gleichgewichtszustand mit den neuen Spaltgrößen So und Su + a einstellt.

Dadurch, dass im beschriebenen Fall die Größe des Spalts 10o kleiner als die Größe des Spalts 10u gewählt wird, muss der Wicklung 6 der oberen Magnetanordnung 3o etwas weniger und der Wicklung 6 der unteren Magnetanordnung 3u etwas mehr Strom zugeführt werden, als ohne diese Regelung gelten würde, damit beide Magnetanordnungen 3o, 3u im Gleichgewichtszustand dieselbe Kraft auf den Lagerkörper 1 ausüben. Dadurch wird erreicht, dass dieser Gleichgewichtszustand mit solchen Strömen erhalten wird, die wiederum zu gleichen Temperaturen in beiden Magnetanordnungen 3o, 3u bzw. deren Wicklungen 6 führen. Mit anderen Worten wird der Wert a so gewählt, dass beide Magnetanordnungen 3o, 3u oder deren Wicklungen 6 trotz der unterschiedlichen Spaltgrößen So und Su im Mittel dieselben Temperaturen annehmen. Erfindungsgemäß wird somit zugunsten der Temperaturgleichheit auf eine exakte Gleichheit der Spaltgrößen verzichtet und sichergestellt, dass unabhängig von der speziellen Lastsituation gleiche Temperaturen in den Magnetanordnungen 3o, 3u oder Wicklungen 6 erhalten werden.

Im Übrigen ist klar, dass die Wicklung 6 der oberen Magnetanordnung 3o vor dem Erreichen des Gleichgewichtszustands kurzzeitig mit einem höheren Strom betrieben werden muss, um den Lagerkörper 1 entsprechend der reduzierten Spaltgröße S1 an sich heranzuziehen. Dieser Vorgang läuft allerdings sehr schnell ab und hat keinen wesentlichen Einfluss auf die Temperatur der Magnetanordnung 3o oder deren Wicklung 6.

Die unterschiedlichen Spaltgrößen, die sich bei der beschriebenen Regelung im Gleichgewichtszustand und unter der veränderten Lastsituation vergleichsweise wenig voneinander unterscheiden, und die damit verbundenen, geringfügigen Lageabweichungen des Lagerkörpers 1 im Lagerkörper 2 sind für den Betrieb des Magnetlagers in den meisten Fällen tolerierbar. Da die elektrische Spaltregelung durchweg relativ schnell erfolgt (z. B. im kHz-Bereich), während sich Temperaturänderungen demgegenüber vergleichsweise langsam auswirken (z. B. im Minutenbereich), können vom Temperaturregelkreis 19 vorgegebene Änderungen keine wesentlichen Auswirkungen auf die von den Reglern 15o, 15u durchzuführenden Regelvorgänge haben.

Ist, wie Fig. 1 zeigt, außer dem Paar mit den Magnetanordnungen 3o, 3u wenigstens ein weiteres Paar mit den Magnetanordnungen 4l, 4r vorhanden, dann sind diese ebenso wie die zugehörigen Regeleinheiten 14l, 14i vorzugsweise genauso ausgebildet, wie oben für die Magnetanordnungen 3o, 3u und die Regeleinheiten 12o, 12u beschrieben ist. Dadurch wird erreicht, dass bei Belastungen des Lagerkörpers 1 in Richtung einer der Magnetanordnungen 4l, 4r ebenfalls auf exakt gleich große Lagerspalte 11l, 11r zugunsten von gleichen Temperaturen in den beiden Magnetanordnungen 4l, 4r bzw. deren Wicklungen 6 verzichtet wird.

Ein bisher für am besten gehaltenes Ausführungsbeispiel der Erfindung sieht vor, dass nicht nur die Temperaturen der sich jeweils gegenüberliegenden Magnetanordnungen 3o und 3u einerseits und/oder 4l und 4r andererseits auf gleiche Werte geregelt werden, sondern die Ströme durch die Wicklungen 6 aller beteiligten Magnetanordnungen 3o, 3u, 4l und 4r im Mittel gleich gemacht werden. Dies kann, wie Fig. 2 zeigt, z. B. dadurch erreicht werden, dass dem Temperaturregelkreis 19 des zuerst beschriebenen Paars von Magnetanordnungen 3o, 3u auch die Temperatur-Istwerte von Temperatursensoren 211, 21r des anderen Paars von Magnetanordnungen 4l, 4r zugeführt werden und die den Wicklungen 6 dieser Magnetanordnungen 3o, 3u zugeführten Ströme im gleichen Maß, d. h. ohne Änderung der Regelvorschrift So-Su = a so vergrößert oder verkleinert werden, dass sich dieselben Temperaturen wie den Magnetanordnungen 4l, 4r bzw. deren Wicklungen 6 ergeben. Eine einfache Möglichkeit hierzu besteht z. B. darin, die Vorspannungen der Regler 15o, 15u entsprechend zu ändern, wenn die mittlere Temperatur, die von den Temperatursensoren 21o, 21u für das Paar 3o, 3u gemeldet wird, um ein vorgewähltes Maß von der mittleren Temperatur abweicht, die von den Temperatursensoren 21l, 21r für das Paar 4l, 4r gemeldet wird. In analoger Weise kann hinsichtlich der in Fig. 2 nicht dargestellten Regeleinrichtungen für die Magnetanordnungen 4l, 4r vorgegangen werden.

Die beschriebenen Regelungen werden vorzugsweise mit üblichen Mikroprozessoren und einer entsprechenden Software realisiert. Da derartige Regelungen und Regelverfahren dem Fachmann geläufig sind, ist eine weitere Erläuterung nicht erforderlich.

Als Mittel zur Ermittlung der Temperaturen sind in Fig. 2 übliche Temperatursensoren 21o bis 21r dargestellt. Besonders vorteilhaft ist es in diesem Zusammenhang, wenn die Ermittlung der Betriebstemperaturen stattdessen indirekt über die elektrischen Widerstände der Wicklungen 6 erfolgt. Die Ermittlung dieser Widerstände kann z. B. über die u. U. bekannten Strom- und Spannungswerte der Wicklungen 6 erfolgen. Aus der bekannten oder vorher ermittelten Temperaturabhängigkeit der Widerstände des Wicklungsmaterials kann dann die Temperatur bestimmt werden.

Die Erfindung ist nicht auf die beschriebenen Ausführungsbeispiele beschränkt, die auf vielfache Weise abgewandelt werden können. Der im Ausfiihrungsbeispiel als Ring oder Zylinder dargestellte Lagerkörper 1 kann sowohl als Innenring, wie in Fig. 1 gezeigt, als auch als Außenring ausgebildet werden. Außerdem kann das Magnetlager statt als Radiallager auch als Axiallager ausgebildet und/oder mit einem Lagerkörper versehen sein, der in anderer Weise als drehbar beweglich gelagert ist. Weiterhin ist klar, dass die Magnetanordnungen 3o, 3u, 41, 4r nur ein Ausführungsbeispiel darstellen. Tatsächlich können auch mehr oder weniger als vier Magnetanordnungen am Umfang des Lagerkörpers 1 angeordnet und/oder mehr als zwei Paare von jeweils gegenüberliegend angeordneten Magnetanordnungen vorgesehen sein. Außerdem kann jede Magnetanordnung aus einer Mehrzahl von in Umfangsrichtung des Lagerkörpers 1 nebeneinander liegenden Kernen und Wicklungen bestehen. Ferner können mehr oder weniger und anders ausgebildete und angeordnete Sensoren 9 und 21 vorgesehen werden. Weiterhin können die beschriebenen Regeleinheiten anders ausgebildet sein und andere Regelstrategien verwendet werden, um gleiche Temperaturen in gegenüberliegenden Magnetanordnungen oder Wicklungen zu erhalten. Insbesondere können die Regeleinheiten 12o, 12u, 14l, 14r für alle vorhandenen Paare von Magnetanordnungen und die zugehörigen Temperaturregelkreise 19 zu einer gemeinsamen Regeleinrichtung zusammengefasst werden. Im Übrigen ist klar, dass die Bezeichnung "gleich" für die Temperaturen, Ströme und Lagerspalte nicht nur identische, sondern auch im Wesentlichen gleiche Werte umfassen soll. Auch für Großlager, deren Lagerkörper beträchtlichen Temperaturdehnungen unterliegen können und auf die die Erfindung besonders vorteilhaft angewendet wird, kann es ausreichen, die Temperaturen von gegenüberliegenden Magnetanordnungen derart aneinander anzunähern, dass die Wärmedehnungen innerhalb vorgewählter Toleranzen bleiben. Schließlich versteht sich, dass die verschiedenen Merkmale auch in anderen als den beschriebenen und dargestellten Kombinationen angewendet werden können.

## Patentansprüche

1. Verfahren zum Betreiben eines Magnetlagers, das einen ferromagnetischen, beweglich gelagerten Lagerkörper (1) und wenigstens zwei, auf gegenüberliegenden Seiten des Lagerkörpers (1) angeordnete und mit Wicklungen (6) versehen ein Magnetanordnungen (3o, 3u) enthält, wobei während des Betriebs des Magnetlagers elektrische Ströme durch die Wicklungen (6) geleitet und diese Ströme so geregelt werden, dass sich in einem Gleichgewichtszustand zwischen dem Lagerkörper (1) und den beiden Magnetanordnungen (3o, 3u) Lagerspalte (10o, 10u) vorgewählter Größe (So, Su) bilden,
und wobei die während des Betriebs in den Magnetanordnungen (3o, 3u) entstehenden Temperaturen gemessen werden, **dadurch gekennzeichnet, dass** die Regelung der Ströme so erfolgt, dass sich im Gleichgewichtszustand unabhängig von der Lastsituation gleiche Temperaturen in den Magnetanordnungen (3o, 3u) oder deren Wicklungen (6) einstellen.

2. Verfahren nach Anspruch 1, **dadurch gekennzeichnet, dass** für den Fall, dass der Lagerkörper (1) während des Betriebs in Richtung der beiden Magnetanordnungen (3o, 3u) unter Nominalbedingungen betrieben wird, die Regelung für die Größen (So, Su) der Lagerspalte (10o, 10u) nach der Vorschrift So - Su = 0 durchgeführt wird, indem durch die Wicklungen (6) beider Magnetanordnungen (3o, 3u) solche Ströme geleitet werden, dass sich sowohl gleich große Lagerspalte (10o, 10u) als auch in beiden Magnetanordnungen (3o, 3u) oder deren Wicklungen (6) gleiche Temperaturen ergeben.

3. Verfahren nach Anspruch 1 oder 2, **dadurch gekennzeichnet, dass** für den Fall dass der Lagerkörper (1) während des Betriebs in Richtung einer der beiden Magnetanordnungen (z. B. 3u) stärker als unter Nominalbedingungen belastet wird, auf eine Regelung für die Größen (So, Su) der Lagerspalte (10o, 10u) nach der Vorschrift So - Su = a mit a < 0 umgestellt wird, um einen Gleichgewichtszustand herzustellen, in dem solche Ströme durch die Wicklungen (6) beider Magnetanordnungen (3o, 3u) fließen, dass deren Temperaturen gleich groß sind, während sich die Größen (So, Su) der Lagerspalte (10o, 10u) um das Maß a unterscheiden.

4. Verfahren nach einem der Ansprüche 1 bis 3, **dadurch gekennzeichnet, dass** beim Vorhandensein von mehr als zwei Magnetanordnungen (3o, 3u, 4l, 4r), die eine Mehrzahl von Paaren aus auf gegenüberliegenden Seiten des Lagerkörpers (1) angeordneten Magnetanordnungen (3o, 3u bzw. 4l, 4r) bilden, die Regelung für alle diese Paare entsprechend wenigstens einem der Ansprüche 1 bis 3 durchgeführt wird.

5. Verfahren nach Anspruch 4, **dadurch gekennzeichnet, dass** die Ströme durch die Wicklungen (6) aller Paare von Magnetanordnungen (3o, 3u, 4l, 4r) ohne Änderung der jeweiligen Regelvorschrift so geregelt werden, dass alle Magnetanordnungen (3o, 3u, 4l, 4r) ohne deren Wicklungen (6) gleiche Durchschnittstemperaturen annehmen.

6. Verfahren nach einem der Ansprüche 1 bis 5, **dadurch gekennzeichnet, dass** die Temperaturen in den Magnetanordnungen (3o, 3u, 4l, 4r) durch Ermittlung der elektrischen Widerstände ihrer Wicklungen (6) bestimmt werden.

7. Magnetlager mit einem ferromagnetischen, beweglich gelagerten Lagerkörper (1), wenigstens zwei, auf gegenüberliegenden Seiten des Lagerkörpers (1) angeordneten und mit Wicklungen (6) versehenen Magnetanordnungen (3o, 3u) und je einer mit der Wicklung (6) verbundenen Regeleinheit (12o, 12u) zur Regelung von die Wicklungen (6) durchfließenden elektrischen Strömen derart, dass sich beim Betrieb ein Gleichgewichtszustand mit Lagerspalten (10o, 10u) vorgewählter Größe (So, Su) einstellt, wobei die Regeleinheiten (12o, 12u) Mittel zur Ermittlung von Betriebstemperaturen der Magnetanordnungen (3o, 3u) bzw. deren Wicklungen (6) aufweisen, **dadurch gekennzeichnet, dass** die Regeleinheiten (12o, 12u) zur derartigen Regelung der Ströme eingerichtet sind, dass sich im Gleichgewichtszustand unabhängig von der Lastsituation gleiche Betriebstemperaturen in den Magnetanordnungen(3o, 3u) oder deren Wicklungen (6) einstellen.

8. Magnetlager nach Anspruch 7, **dadurch gekennzeichnet, dass** die Regeleinheiten (12o, 12u), wenn der Lagerkörper (1) während des Betriebs in Richtang der beiden Magnetanordnungen (3o, 3u) unter Nominalbedingungen betrieben wird, nach der Vorschrift So - Su = 0 für die Größen (So, Su) der Lagerspalte (10o,10u) arbeiten.

9. Magnetlager nach Anspruch 7 oder 8, **dadurch gekennzeichnet, dass** die Regeleinheiten (12o, 12u), wenn der Lagerkörper (1) während des Betriebs in Richtung einer der beiden Magnetanordnungen (z. B. 3u) stärker als unter Nominalbedingungen belastet wird, nach der Vorschrift So - Su = a mit a < 0 für die Größen (So, Su) der Lagerspalte (10o, 10u) und derart arbeiten, dass ein Gleichgewichtszustand erhalten wird, in dem solche Ströme durch die Wicklungen (6) beider Magnetanordnungen (3o, 3u) fließen, dass deren Temperaturen gleich groß sind, während sich die Größen (So, Su) der Lagerspalte (10o, 10u) um das Maß a voneinander unterscheiden.

10. Magnetlager nach einem der Ansprüche 7 bis 9, **dadurch gekennzeichnet, dass** die Regeleinheiten (12o, 12u), wenigstens je einen Spaltsensor (9o, 9u) für jede der beiden Magnetanordnungen (3o, 3u) und einen mit diesem verbundenen Regler (15o, 15u) aufweisen, dem je ein Sollwert für die Regelung der Spaltgröße (So, Su) zugeführt wird.

11. Magnetlager nach Anspruch 10, **dadurch gekennzeichnet, dass** die Regeleinheiten (12o, 12u) mit einem Temperaturregelkreis (19) verbunden sind, der mit den Mitteln zur Temperaturermittlung verbundene Eingänge und die Sollwerte ausgebende Ausgänge aufweist.

12. Magnetlager nach Anspruch 11, **dadurch gekennzeichnet, dass** an den Ausgängen des Temperaturregelkreises (19), wenn beide Magnetanordnungen (3o, 3u) gleiche Betriebstemperaturen haben, Sollwerte entsprechend der Vorschrift So - Su = 0 und, wenn beide Magnetanordnungen (3o, 3u) ungleiche Betriebstemperaturen haben, Sollwerte entsprechend der Vorschrift So- Su = a mit a < 0 erscheinen.

13. Magnetlager nach einem der Ansprüche 7 bis 12, **dadurch gekennzeichnet, dass** es mehr als zwei Magnetanordnungen, die eine Mehrzahl von Paaren aus auf gegenüberliegenden Seiten des Lagerkörpers (1) angeordneten Magnetanordnungen (3o, 3u bzw. 4l, 4r) bilden, und mit diesen verbundene, weitere Regeleinheiten (14l, 14r) enthält, die wie die Regeleinheiten (12o, 12u) nach wenigstens einem der Ansprüche 7 bis 12 eingerichtet und betreibbar sind.

14. Magnetlager nach Anspruch 13, **dadurch gekennzeichnet, dass** die Regeleinheiten (12o, 12u; 14l, 14r) so eingerichtet sind, dass die Ströme durch die Wicklungen (6) aller Paare von Magnetanordnungen (3o, 3u; 4l, 4r) ohne Änderung der jeweiligen Regelvorschrift derart geregelt werden, dass alle Magnetanordnungen (3o, 3u; 4l, 4r) gleiche Durchschnittstemperaturen annehmen.

15. Magnetlager nach einem der Ansprüche 7 bis 14, **dadurch gekennzeichnet, dass** die Ermittlung der Betriebstemperaturen über die elektrischen Widerstände der Wicklungen (6) der Magnetanordnungen (3o, 3u; 4l, 4r) erfolgt.

16. Magnetlager nach einem der Ansprüche 7 bis 15, **dadurch gekennzeichnet, dass** der Lagerkörper (1) ein zylindrischer Lagerring ist und die Magnetanordnungen (3o, 3u; 4l, 4r) am Umfang des Lagerrings angeordnet sind.

## Claims

1. A method for operating a magnetic bearing containing a ferromagnetic movably mounted bearing body (1) and at least two magnet arrays (3o, 3u) arranged on opposite sides of the bearing body (1) and provided with windings (6), wherein during operation of the magnetic bearing electric currents are directed through the windings (6), which currents are controlled in such a manner that in a state of equilibrium between the bearing body (1) and the two magnet arrays (3o, 3u) bearing gaps (10o, 10u) of a preselected size (So, Su) are formed, and wherein the temperatures occurring during operation in the magnet arrays (3o, 3u) are measured, **characterised in that** control of the currents is effected such that in the state of equilibrium, independently of the load situation, equal temperatures occur in the magnet arrays (3o, 3u) or in their windings (6).

2. The method according to claim 1, **characterised in that** in the case that the bearing body (1) during operation in direction of the two magnet arrays (3o, 3u) is operated under normal conditions, control for the sizes (So, Su) of the bearing gaps (10o, 10u) is performed according to rule So - Su = 0 by having such currents directed through the windings (6) of both magnet arrays (3o, 3u) as to result not only in equally large bearing gaps (10o, 10u) but also in equal temperatures in both magnet arrays (3o, 3u) or in their windings (6).

3. The method according to claim 1 or 2, **characterised in that** in the case that the bearing body (1) during operation in direction of one of the two magnet arrays (e.g. 3u) is subjected to a greater load than under normal conditions, control for the sizes (So, Su) of the bearing gaps (10o, 10u) is changed to rule So - Su = a with a < 0, in order to establish a state of equilibrium by having such currents flowing through the windings (6) of both magnet arrays (3o, 3u) as to ensure that their temperatures are equal, whilst the sizes (So, Su) of the bearing gaps (10o, 10u) differ from each other by the amount a.

4. The method according to one of claims 1 to 3, **characterised in that** in case more than two magnet arrays (3o, 3u, 4l, 4r) exist, which form a plurality of pairs of magnet arrays (3o, 3u or 4l, 4r) arranged on opposite sides of the bearing body (1), control for all these pairs is performed according to at least one of claims 1 to 3.

5. The method according to claim 4, **characterised in that** the currents flowing through the windings (6) of all pairs of magnet arrays (3o, 3u, 4l, 4r) are controlled without changing the respective control rule such that all magnet arrays (3o, 3u, 4l, 4r) or their windings (6) assume equal average temperatures.

6. The method according to one of claims 1 to 5, **characterised in that** the temperatures in the magnet arrays (3o, 3u, 4l, 4r) are ascertained by ascertaining the electric resistances of their windings (6).

7. A magnetic bearing with a ferromagnetic, movably mounted bearing body (1) and at least two magnet arrays (3o, 3u) arranged on opposite sides of the bearing body (1) and provided with windings (6), and with a control unit (12o, 12u) each connected to the winding (6) for controlling electric currents flowing through the windings (6) such that in operation a state of equilibrium with bearing gaps (10o, 10u) of a preselected size (So, Su) occurs, wherein the control units (12o, 12u) comprise means for ascertaining operating temperatures of the magnet arrays (3o, 3u) or their windings (6), **characterised in that** the control units (12o, 12u) are adapted to control the currents in such a way that in the state of equilibrium, independently of the load situation, equal operating temperatures occur in the magnet arrays (3o, 3u) or their windings (6).

8. The magnetic bearing according to claim 7, **characterised in that** the control units (12o, 12u), if the bearing body (1) during operation in direction of the two magnet arrays (3o, 3u) is operated under normal conditions, operate according to rule So - Su = 0 for the sizes (So, Su) of the bearing gaps (10o, 10u).

9. The magnetic bearing according to claim 7 or 8, **characterised in that** the control units (12o, 12u), if the bearing body (1) during operation in direction of one of the two magnet arrays (e.g. 3u) is subjected to a greater load than under normal conditions, operate according to rule So - Su = a with a < 0 for the sizes (So, Su) of the bearing gaps (10o, 10u) and in such a way that a state of equilibrium is obtained by having such currents flowing through the windings (6) of both magnet arrays (3o, 3u) that their temperatures are equal, whilst the sizes (So, Su) of the bearing gaps (10o, 10u) differ from each other by the amount a.

10. The magnetic bearing according to one of claims 7 to 9, **characterised in that** the control units (12o, 12u) each comprise at least one gap sensor (9o, 9u) for each of the two magnet arrays (3o, 3u) and a controller (15o, 15u) each connected thereto, to each of which a required value is supplied for controlling the gap size (So, Su).

11. The magnetic bearing according to claim 10, **characterised in that** the control units (12o, 12u) are connected to a temperature control circuit (19), which comprises inputs connected to the means for temperature ascertainment and outputs outputting the required values.

12. The magnetic bearing according to claim 11, **characterised in that** when both magnet arrays (3o, 3u) have equal operating temperatures, required values according to rule So - Su = 0 appear at the outputs of the temperature control circuit (19), and when both magnet arrays (3o, 3u) have unequal operating temperatures, required values according to rule So-Su = a with a < 0 appear.

13. The magnetic bearing according to one of claims 7 to 12, **characterised in that** it contains more than two magnet arrays forming a plurality of pairs of magnet arrays (3o, 3u or 4l, 4r) arranged on opposite sides of the bearing body (1) and further control units (14l, 14r) connected thereto, which are adapted and operable in the same way as the control units (12o, 12u) according to at least one of claims 7 to 12.

14. The magnetic bearing according to claim 13, **characterised in that** the control units (12o, 12u; 14l, 14r) are adapted such that the currents flowing through the windings (6) of all pairs of magnet arrays (3o, 3u; 4l, 4r) are controlled without changing the respective rule such that all magnet arrays (3o, 3u; 4l, 4r) assume equal average temperatures.

15. The magnetic bearing according to one of claims 7 to 14, **characterised in that** ascertainment of the operating temperatures is effected via the electric resistances of the windings (6) of the magnet arrays (3o, 3u; 4l, 4r).

16. The magnetic bearing according to one of claims 7 to 15, **characterised in that** the bearing body (1) is a cylindrical bearing ring and the magnet arrays (3o, 3u; 4l, 4r) are arranged on the periphery of the bearing ring.

## Revendications

1. Procédé pour faire fonctionner un palier magnétique qui contient un corps de palier ferromagnétique (1) monté de manière mobile et au moins deux agencements magnétiques (3o, 3u) disposés sur des côté situés en vis-à-vis du corps de palier (1) et dotés d'enroulements (6), dans lequel, pendant le fonctionnement du palier magnétique, des courants électriques sont conduits à travers les enroulements (6) et ces courants étant réglés de telle sorte que dans un état d'équilibre, des fentes de palier (10o, 10u) de grandeur (So, Su) présélectionnée se forment entre les corps de palier (1) et les deux agencements magnétiques (3o, 3u), et dans lequel, pendant le fonctionnement, on mesure des températures se produisant dans les agencements magnétiques (3o, 3u), **caractérisé en ce que** la régulation des courants s'effectue de telle sorte que, dans l'état d'équilibre, indépendamment de la situation de sollicitation, des températures identiques s'établissent dans les agencements magnétiques (3o, 3u) ou les enroulements (6) de ceux-ci.

2. Procédé selon la revendication 1, **caractérisé en ce que**, pour le cas où l'on fait fonctionner le corps de palier (1) dans des conditions nominales pendant le fonctionnement en direction des deux agencements magnétiques (3o, 3u), la régulation pour les grandeurs (So, Su) des fentes de palier (10o, 10u) est effectuée selon la règle So - Su = 0 **en ce que** l'on conduit des courants à travers les enroulements (6) des deux agencements magnétiques (3o, 3u) d'un genre tel, que l'on obtient des fentes de palier (10o, 10u) de même grandeur tout comme également des températures identiques dans les deux agencements magnétiques (3o, 3u) ou les enroulements (6) de ceux-ci.

3. Procédé selon la revendication 1 ou 2, **caractérisé en ce que**, pour le cas où le corps de palier (1) est plus fortement sollicité pendant le fonctionnement en direction de l'un des deux agencements magnétiques (par exemple 3u) que dans des conditions nominales, on passe à une régulation pour les grandeurs (So, Su) des fentes de palier (10o, 10u) selon la règle So - Su = a, avec a < 0, afin de produire un état d'équilibre où des courants d'un genre tel circulent à travers les enroulements (6) des deux agencements magnétiques (3o, 3u), que les températures de ceux-ci sont de même niveau alors que les grandeurs (So, Su) des fentes de palier (10o, 10u) diffèrent de l'ordre de la mesure a.

4. Procédé selon l'une des revendications 1 à 3, **caractérisé en ce qu'**en cas de présence de plus de deux agencements magnétiques (3o, 3u, 4l, 4r) qui forment une pluralité de paires d'agencements magnétiques (3o, 3u ou 4l, 4r) disposés sur des côtés en vis-à-vis du corps de palier (1), on effectue la régulation pour toutes ces paires conformément à au moins l'une des revendications 1 à 3.

5. Procédé selon la revendication 4, **caractérisé en ce que** les courants à travers les enroulements (6) de toutes les paires d'agencements magnétiques (3o, 3u, 41, 4r) sont réglés sans modification de la prescription de règle respective de telle sorte que tous les agencements magnétiques (3o, 3u, 4l, 4r) adoptent les mêmes températures moyennes sans leurs enroulements (6).

6. Procédé selon l'une des revendications 1 à 5, **caractérisé en ce que** les températures dans les agencements magnétiques (3o, 3u, 4l, 4r) sont fixées par détermination des résistances électriques dans leurs enroulements (6).

7. Palier magnétique avec un corps de palier (1) ferromagnétique monté de manière mobile, au moins deux agencements magnétiques (3o, 3u) disposés sur des côtés situés en vis-à-vis du corps de palier (1) et dotés d'enroulements (6) et avec respectivement une unité de régulation (12o, 12u) reliée à l'enroulement (6) pour la régulation de courants électriques circulant à travers les enroulements (6) de telle sorte que lors du fonctionnement, un état d'équilibre avec des fentes de palier (10o, 10u) de grandeur (So, Su) présélectionnée s'établit, dans lequel les unités de régulation (12o, 12u) présentent des moyens pour la détermination de températures de fonctionnement des agencements magnétiques (3o, 3u) ou de leurs enroulements (6), **caractérisé en ce que** les unités de régulation (12o, 12u) sont étudiées pour une régulation des courants telle, qu'à l'état d'équilibre, indépendamment de la situation de sollicitation, des températures de fonctionnement identiques s'établissent dans les agencements magnétiques (3o, 3u) ou les enroulements (6) de ceux-ci.

8. Palier magnétique selon la revendication 7, **caractérisé en ce que**, lorsque l'on fait fonctionner le corps de palier (1) dans des conditions nominales pendant le fonctionnement en direction des deux agencements magnétiques (3o, 3u), les unités de régulation (12o, 12u) travaillent selon la règle So-Su = 0 pour les grandeurs (So, Su) des fentes de palier (10o, 10u).

9. Palier magnétique selon la revendication 7 ou 8, **caractérisé en ce que**, lorsque le corps de palier (1) est plus fortement sollicité que dans des conditions nominales pendant le fonctionnement en direction de l'un des deux agencements magnétiques (par exemple 3u), les unités de régulation (12o, 12u) travaillent selon la règle So - Su = a, avec a < 0 pour les grandeurs (So, Su) des fentes de palier (10o, 10u) et de telle sorte qu'un état d'équilibre est obtenu où des courants d'un genre tel circulent à travers les enroulements (6) des deux agencements magnétiques (3o, 3u), que leurs températures sont de même niveau alors que les grandeurs (So, Su) des fentes de palier (10o, 10u) diffèrent entre elles de l'ordre de la mesure a.

10. Palier magnétique selon l'une des revendications 7 à 9, **caractérisé en ce que** les unités de régulation (12o, 12u) présentent au moins respectivement un capteur de fente (9o, 9u) pour chacun des deux agencements magnétiques (3o, 3u) et un régulateur (15o, 15u) relié à celui-ci, auquel on amène respectivement une valeur de consigne pour la régulation de la grandeur de fente (So, Su).

11. Palier magnétique selon la revendication 10, **caractérisé en ce que** les unités de régulation (12o, 12u) sont reliées à un circuit de régulation de température (19) qui présente des entrées reliées aux moyens pour la détermination de la température et des sorties produisant les valeurs de consigne.

12. Palier magnétique selon la revendication 11, **caractérisé en ce qu'**aux sorties du circuit de régulation de température (19), lorsque les deux agencements magnétiques (3o, 3u) ont des températures de fonctionnement identiques, des valeurs de consigne conformément à la règle So - Su = 0 apparaissent, et lorsque les deux agencements magnétiques (3o, 3u) ont des températures de fonctionnement non identiques, des valeurs de consigne conformément à la règle So - Su = a avec a < 0 apparaissent.

13. Palier magnétique selon l'une des revendications 7 à 12, **caractérisé en ce qu'**il contient plus de deux agencements magnétiques qui forment une pluralité de paires d'agencements magnétiques (3o, 3u ou 4l, 4r) situés sur des côtés situés en vis-à-vis du corps de palier (1) et d'autres unités de régulation (14l, 14r) reliées à ceux-ci, lesquelles sont étudiées et peuvent fonctionner comme les unités de régulation (12o, 12u) selon l'une au moins des revendications 7 à 12.

14. Palier magnétique selon la revendication 13, **caractérisé en ce que** les unités de régulation (12o, 12u ; 14l, 14r) sont étudiées de telle sorte que les courants à travers les enroulements (6) de toutes les paires d'agencements magnétiques (3o, 3u ; 4l, 4r) sont régulés sans modification de la prescription de règle respective de manière à ce que tous les agencements magnétiques (3o, 3u ; 4l, 4r) adoptent des températures moyennes identiques.

15. Palier magnétique selon l'une des revendications 7 à 14, **caractérisé en ce que** la détermination des températures de fonctionnement s'effectue via les résistances électriques des enroulements (6) des agencements magnétiques (3o, 3u ; 4l, 4r).

16. Palier magnétique selon l'une des revendications 7 à 15, **caractérisé en ce que** le corps de palier (1) est une bague de roulement cylindrique et **en ce que** les agencements magnétiques (3o, 3u ; 4l, 4r) sont disposés sur le pourtour de la bague de roulement.
